# EUROPÄISCHE PATENTSCHRIFT

(11) **EP 3 394 482 B1**
(45) Veröffentlichungstag und Bekanntmachung des Hinweises auf die Patenterteilung: **18.03.2020**
(21) Anmeldenummer: 16815788.1
(22) Anmeldetag: 13.12.2016
(51) Int. Cl.: F16J 15/16, F16J 15/24

(54) **ROTATIONSDICHTUNGSANORDNUNG MIT SCHRAUBENFEDERDICHTELEMENT**
ROTARY SEAL ARRANGEMENT WITH HELICAL SPRING SEALING ELEMENT
ENSEMBLE DE JOINT D'ÉTANCHÉITÉ ROTATIF COMPRENANT UN ÉLÉMENT D'ÉTANCHÉITÉ À RESSORT HÉLICOÏDAL

(30) Priorität: 23.12.2015 DE 102015226691
(43) Veröffentlichungstag der Anmeldung: 31.10.2018
(73) Patentinhaber: Trelleborg Sealing Solutions Germany GmbH, 70565 Stuttgart (DE)
(72) Erfinder: FRANZ, Martin, 72827 Wannweil (DE); WEHMANN, Christoph, 70199 Stuttgart (DE); IVERSEN, Gert Mølsted, 3000 Helsingør (DK); CRUDU, Monica, 70376 Stuttgart (DE); HAHN, Bernhard, 73733 Esslingen (DE); KECK, Matthias, 71272 Renningen (DE)
(74) Vertreter: Kohler Schmid Möbus Patentanwälte
(86) Internationale Anmeldenummer: PCT/EP2016/080748
(87) Internationale Veröffentlichungsnummer: WO 2017/108496

(56) Entgegenhaltungen:
- EP-A1- 2 275 721
- US-A1- 2013 300 069

## Beschreibung

Die Erfindung betrifft eine Rotationsdichtungsanordnung mit zwei Maschinenteilen, die um eine Drehachse relativ zueinander rotierbar angeordnet sind, wobei eines der beiden Maschinenteile eine Dichtungshaltestruktur und das jeweils andere der beiden Maschinenteile eine Dichtfläche ausbildet. Die Rotationsdichtungsanordnung weist eine Rotationsdichtung zum Abdichten eines zwischen den beiden Maschinenteilen ausgebildeten Dichtspalts auf, mit einem elastisch verformbaren Halteelement, das an oder in der Dichtungshaltestruktur des einen Maschinenteils gehalten ist und mit einem Dichtelement, das an der Dichtfläche des jeweils anderen Maschinenteils mit einer Kontaktflächenpressung dichtend anliegt.

Derlei Rotationsdichtungsanordnungen finden sich in der Praxis bei einer Vielzahl von technischen Anwendungen und werden beispielsweise bei Antriebsystemen eingesetzt.

Die Rotationsdichtungen der am Markt verfügbaren Rotationsdichtungsanordnungen unterliegen im Betrieb nicht zuletzt aufgrund der Reibung der Rotationsdichtung an der zugeordneten Dichtfläche einer hohen mechanischen und ggf. auch thermischen Belastung, so dass die Rotationsdichtungen einem hohen Verschleiß unterliegen. Dies kann zu Ausfällen der Rotationsdichtungsanordnungen führen und macht einen hohen Wartungsaufwand erforderlich.

Aus der US 2013/300069 A1 ist eine eingangs genannte Rotationsdichtungsanordnung bekannt geworden, bei der das Dichtungselement als ein Schraubenfederdichtungselement ausgebildet ist, das zur Drehachse koaxial verlaufend angeordnet ist.

Das Schraubenfederdichtungselement ist in einer Umfangsnut des Halteelements in axialer Richtung derart gehalten angeordnet, dass das Schraubenfederdichtungselement bei einer Rotationsbewegung der Maschinenteile relativ zueinander proportional zum Reibwiderstand zwischen dem Schraubenfederdichtungselement und der Dichtfläche tordiert und die Kontaktflächenpressung zwischen dem Schraubenfederdichtungselement und der Dichtfläche verringert wird.

Es ist deshalb die Aufgabe der Erfindung, eine Rotationsdichtungsanordnung mit einem vereinfachten Aufbau und einem verbesserten Dichtungswirkung anzugeben, bei der zugleich einem übermäßigen Verschleiß des Dichtelements an der Dichtfläche entgegengewirkt und so die Standzeit der Rotationsdichtungsanordnung/Rotationsdichtung verbessert wird.

Die die Rotationsdichtungsanordnung betreffende Aufgabe wird durch eine Rotationsdichtungsanordnung mit den in Anspruch 1 angegebenen Merkmalen gelöst. Vorteilhafte Weiterbildungen der Erfindung sind Gegenstand der Unteransprüche sowie der Beschreibung.

Bei der erfindungsgemäßen Rotationsdichtungsanordnung ist das Dichtelement der Rotationsdichtung als ein Schraubenfederdichtelement ausgebildet. Das Schraubenfederdichtelement ist zur Drehachse koaxial verlaufend angeordnet und in einer Umfangsnut des Halteelements derart angeordnet, dass das Schraubenfederdichtelement bei einer bzw. durch eine Rotationsbewegung der Maschinenteile relativ zueinander proportional zur Reibung bzw. einem Reibwiderstand zwischen dem Schraubenfederdichtelement und der Dichtfläche des jeweils anderen Maschinenteils tordiert und (dadurch) die (Kontakt-)Flächenpressung zwischen dem Schraubenfederdichtelement und der Dichtfläche verringert wird. Das Schraubenfederdichtelement wird mit anderen Worten durch eine steigende Reibung zwischen dem Schraubenfederdichtelement und der Dichtfläche, bzw. einen vergrößerten Reibwiderstand, zunehmend derart tordiert, dass sich die Flächenpressung zwischen dem Schraubenfederdichtelement und der Dichtfläche, verringert. Die reibungsvermittelte bzw. -gesteuerte Torsion des Schraubenfederelements bedingt eine Verformung und mithin eine Änderung des (aktiven) Querschnitts des Schraubenfederelements, durch die eine Entlastung der an der Dichtfläche anliegenden Schraubenfederelements ermöglicht ist. Die Reibung zwischen dem Schraubenfederelement und der Dichtfläche kann dadurch während des Betriebseinsatzes der Rotationsdichtungsanordnung insgesamt auf eine vorgegebene Reibung, d.h. der der Rotationsbewegung der beiden Maschinenteile hemmende Reibwiederstand auf einen vorgegebenen Reibwiderstand, begrenzt bzw. eingeregelt werden. Die Rotationsdichtung verfügt somit über ein Selbstschutzsystem gegenüber einer übermäßigen Reibung an der Dichtfläche. Dadurch kann einer übermäßigen Beanspruchung des Dichtelements durch Reibung an der Dichtfläche und somit einem Verschleiß des Dichtelements wirksam entgegengewirkt werden. Die Standzeit der Rotationsdichtung und damit der Rotationsdichtungsanordnung kann dadurch entscheidend verbessert werden. Das reibungsgesteuerte Selbstentlastungsverhalten des Schrauben-federdichtelements kann durch eine entsprechend gewählte Federkennlinie bzw. Federkonstante des Schraubenfederdichtelements eingestellt werden. Verringert sich die Reibung bzw. der Reibwiderstand zwischen dem Schraubenfederdichtelement und der Dichtfläche, so wird das Schraubenfederdichtelement entsprechend weniger stark tordiert und entlastet.

Das Schraubenfederdichtelement der Rotationsdichtungsanordnung kann erfindungsgemäß innenumfangsseitig oder alternativ außenumfangsseitig an der Dichtfläche eines der beiden Maschinenteile anliegen. Im erstgenannten Fall spricht man von einer innendichtenden Rotationsdichtung, im letztgenannten Fall von einer außendichtenden Rotationsdichtung. Die Rotationsdichtungsanordnung kann dadurch einen breiten technischen Anwendungsbereich abdecken.

Die Umfangsnut des Halteelements weist für das Schraubenfederdichtelement zumindest einenends einen ersten Drehanschlag für das Schraubenfederdichtelement auf. Dadurch kann sich das Schraubenfederelement, an dem Anschlag in der Weise abstützen, dass dieses - reibungsvermittelt - durch die Drehbewegung des rotierbar gelagerten Maschinenteils in eine erste Drehrichtung tordiert wird und durch die damit einhergehende Verformung die Kontaktflächenpressung zwischen dem Schraubenfederelement und der Dichtfläche reduziert wird. Sofern die Rotationsdichtungsanordnung für eine bidirektionale Drehbewegung, d.h. sowohl bei einer ersten und einer der ersten Drehrichtung entgegengesetzten zweiten Drehrichtung gegenüber dem jeweils anderen Maschinenteil rotierbar ist, weist das Halteelement vorzugsweise einen zweiten Drehanschlag auf.

Im dem Falle, dass die Rotationsdichtung außendichtend ausgeführt ist, ist das Schraubenfederdichtelement vorzugsweise mit zumindest einem seiner freien Enden am Halteelement lagefixiert gehalten. Dadurch kann das Schraubenfederdichtungselement bei Überschreiten/Erreichen des vorgegebenen Reibungswiderstands des Schraubenfederdichtelements an der Dichtfläche derart tordiert werden, dass das Schraubenfederdichtelement in radialer Richtung komprimiert und so die Kontaktflächenpressung des Schraubenfederdichtelements gegen die Dichtfläche verringert wird.

Das Schraubenfederdichtelement ist in der Umfangsnut des Halteelements vorzugsweise form- oder kraftschlüssig gehalten angeordnet. Dadurch kann eine zuverlässige Abdichtung des Dichtspalts gewährleistet werden. Im Falle einer Druckbeaufschlagung des Dichtspalts, beispielsweise mit Öl, kann sich das Schraubenfederelement über seine gesamte helikale Erstreckung an der niederdruckseitigen Nutflanke des Halteelements abstützen. Die elastischen Eigenschaften des Halteelements gewährleisten dabei jederzeit eine dichte axiale Anlage des Schraubenfederelements am Halteelement. Kleinere Unebenheiten des Schraubenfederdichtelements können durch das Halteelement zuverlässig ausgeglichen werden.

Das Schraubenfederelement kann grundsätzlich im vorgespannten Zustand auf der Dichtfläche montiert sein, so dass die Kontaktflächenpressung, mit der das Schraubenfederdichtelement an der Dichtfläche eines der beiden Maschinenteile anliegt, zumindest teilweise aus dem dem Schraubenfederelement innewohnenden elastischen Rückstellvermögen resultiert.

Nach der Erfindung ist das Schraubenfederdichtelement zusätzlich durch das elastische Halteelement gegen die Dichtfläche vorgespannt. Das Halteelement hat die Funktion eines in radialer Richtung wirkenden Vorspannelements.

Die Standzeit der erfindungsgemäßen Rotationsdichtungsanordnung kann dadurch nochmals weiter verbessert werden, dass das Schraubenfederdichtelement an seiner an der Dichtfläche anliegenden Umfangsfläche eine Riefe bzw. Nut aufweist, die zur Drehachse bevorzugt schraubenförmig verlaufend angeordnet ist. Durch eine solche Riefe/Nute kann im Betriebseinsatz der Rotationsdichtungsanordnung eine aktive Rückförderung eines im Dichtspalt angeordneten Fluids, beispielsweise eines Schmierstoffs, erreicht werden. Dadurch kann eine Teil- oder Vollschmierung der Rotationsdichtung im verschleißanfälligen Anlagebereich des Schraubenfederdichtelements an der Dichtfläche erreicht werden.

Das Schraubenfederdichtelement kann nach einer alternativen Ausführungsform der Erfindung auch mit Trockenschmierstoffen versehen sein. Dadurch wird ein besonders wartungsarmer Betrieb der Rotationsdichtungsanordnung ermöglicht.

Das Schraubenfederdichtelement kann erfindungsgemäß aus einem thermoplastischen oder duroplastischen Kunststoff, einem Verbundwerkstoff oder aus Metall bestehen. Dadurch kann die Rotationsdichtungsanordnung auf die im Betriebseinsatz zu erwartenden äußeren Einflüsse chemischer oder physikalischer Natur ausgelegt werden.

Für ein feinfühliges Ansprechverhalten der Rotationsdichtung sind das Schraubenfederelement und/oder das Halteelement vorteilhaft mit einer Gleitbeschichtung versehen. Die Gleitbeschichtung kann beispielsweise Graphit oder PTFE (Polytetrafluoräthylen) umfassen.

Die Erfindung wird nachstehend anhand von in der Zeichnung wiedergegebener Ausführungsbeispiele näher erläutert.

In der Zeichnung zeigen:
- Fig. 1: eine Rotationsdichtungsanordnung mit einem ersten und einem zweiten Maschinenteil und mit einem als Schraubenfederdichtelement ausgebildeten Dichtelement, das radial innendichtend ausgeführt ist und welches in einer Umfangsnut eines elastisch verformbaren Halteelements angeordnet ist, in einem teilweisen Längsschnitt;
- Fig. 2: die Rotationsdichtungsanordnung aus Fig. 1 mit Darstellung einer rotatorischen Relativlage des Schraubenfederdichtelements gegenüber dem Halteelement, in einer teilweise geschnittenen Seitenansicht;
- Fig. 3: die Rotationsdichtungsanordnung aus Fig. 1, im teilweisen Querschnitt;
- Fig. 4: die Rotationsdichtungsanordnung aus Fig. 1, bei der das in radialer Richtung innere Maschinenteil in einer ersten Drehrichtung rotiert, mit aktiviertem Schraubenfederdichtelement, in einer ausschnittsweisen Schnittansicht;
- Fig. 5: die Rotationsdichtungsanordnung aus Fig. 4 in einem teilweisen Querschnitt;
- Fig. 6: die Rotationsdichtungsanordnung aus Fig. 1 bei einer anderen Drehrichtung des in radialer Richtung inneren Maschinenteils, in einer Seitenansicht mit teilweiser Schnittdarstellung;
- Fig. 7: eine weitere Rotationsdichtungsanordnung, bei der die Dichtung in radialer Richtung außendichtend ausgeführt ist; in einer teilweisen Schnittdarstellung;
- Fig. 8: die Rotationsdichtungsanordnung aus Fig. 7 in einem Querschnitt;
- Fig. 9: eine alternative Ausführungsform des Schraubenfederdichtelements der Rotationsdichtungsanordnungen gemäß Fign. 1 bis 8, in einer Schnittdarstellung; und
- Fig. 10: eine alternative Ausführungsform des Schraubenfederdichtelements der Rotationsdichtungsanordnungen gemäß Fign. 1 bis 8, in einer Schnittdarstellung.

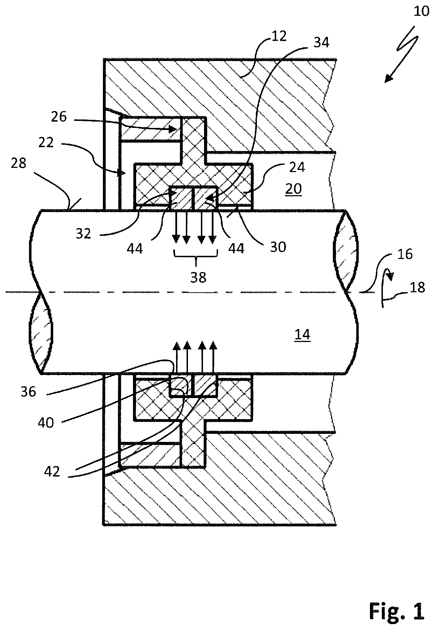

**Fig. 1** zeigt eine Rotationsdichtungsanordnung **10** mit einem ersten und mit einem zweiten Maschinenteil **12**, **14**, die zu einer Drehachse **16** koaxial angeordnet sind. Das zweite Maschinenteil 14 ist relativ zum ersten Maschinenteil 12 um die Drehachse 16 rotierbar gelagert. Eine erste Drehrichtung (im Uhrzeigersinn) des zweiten Maschinenteils ist mit **18** bezeichnet. Das erste Maschinenteil 12 ist als ein Gehäuse ausgebildet, das das in radialer Richtung innenliegend angeordnete zweite Maschinenteil 14 ringförmig umgreift. Das zweite Maschinenteil 14 kann eine Lagerung für das zweite Maschinenteil aufweisen bzw. ausbilden (in Fig. 1 nicht gezeigt).

Zwischen den beiden Maschinenteilen 12, 14 ist ein ringförmiger Dichtspalt **20** ausgebildet. Zur Abdichtung des Dichtspalts 20 dient eine Rotationsdichtung **22,** die ein elastisch verformbares bzw. elastomeres Halteelement **24** und ein Dichtelement aufweist.

Das erste Maschinenteil 12 weist eine Dichtungshaltestruktur **26** auf, die vorliegend als eine Nut ausgebildet ist. In der Dichtungshaltestruktur 26 ist das Halteelement der Rotationsdichtung 22 am ersten Maschinenteil 12 drehfest festgelegt bzw. befestigt. Das zweite Maschinenteil 14 weist eine Dichtfläche **28** auf, die durch die äußere Mantelfläche des zweiten Maschinenteils 14 gebildet ist. Das elastisch verformbare Halteelement 24 weist an seiner der Dichtfläche 28 zuweisenden Oberfläche **30** eine Umfangsnut **32** auf. In der Umfangsnut 32 ist das Dichtelement gehalten angeordnet. Das Dichtelement steht aus der Umfangsnut 32 in radialer Richtung hervor und liegt an der Dichtfläche 28 des zweiten Maschinenteils 14 vorgespannt dichtend an.

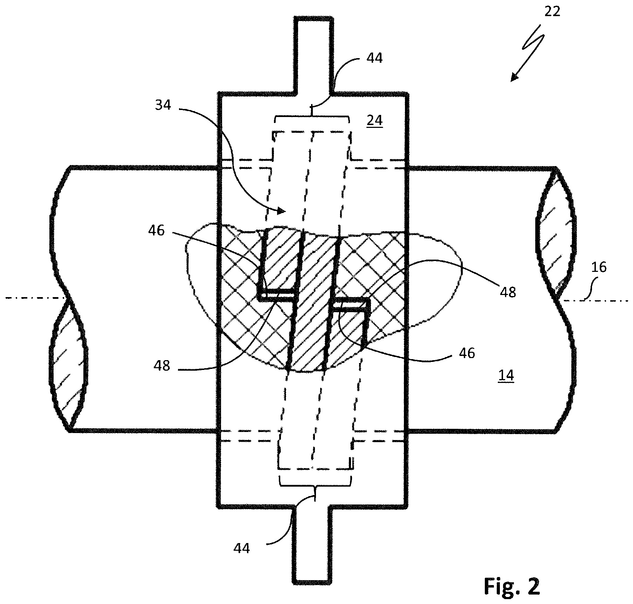

Das Dichtelement ist als ein Schraubenfederdichtelement **34** ausgebildet. Das Schraubenfederdichtelement 34 ist koaxial zur Drehachse 16 angeordnet und umgreift das zweite Maschinenteil 14 ringförmig. Das Schraubenfederdichtelement 34 liegt innenumfangsseitig, d.h. mit seiner inneren Umfangsfläche **36**, an der Dichtfläche 28 mit einer durch Pfeile verdeutlichten Kontaktflächenpressung **38** an der Dichtfläche 28 des zweiten Maschinenteils an. Die Kontaktflächenpressung 38 des Schraubenfederdichtelements 34 gegen die Dichtfläche 28 kann durch das elastische Rückstellverhalten der Schraubenfeder selbst und/oder durch eine radial gerichtete Vorspannung des Schraubenfederdichtelements 34 mittels des Halteelements 24 erzeugt sein. Das Schraubenfederdichtelement 34 liegt vorliegend mit der ihm innewohnenden elastischen Rückstellkraft und zusätzlich unterstützt durch das Halteelement 24 an der Dichtfläche 28 vorgespannt dichtend an. Das Schraubenfederdichtelement liegt dementsprechend an einem Nutgrund **40** der Umfangsnut 32 des Halteelements 24 spielfrei an. Das Schraubenfederdichtelement 34 ist zwischen Nutflanken **42** der Umfangsnut 32 in axialer Richtung form- oder kraftschlüssig gehalten. Dadurch wird in diesem Bereich eine zuverlässige Abdichtung des Dichtspalts 20 in axialer Richtung erreicht. Zwecks einer geringen Gleit- bzw. Haftreibung zwischen dem Schraubenfederdichtelement 34 und dem Halteelement 24 kann das Schraubenfederdichtelement 34 mit einer Gleitbeschichtung (in Fig. 2 nicht gezeigt) beschichtet sein.

In **Fig. 2** ist die Rotationsdichtung 22 und das zweite Maschinenteil 14 der Rotationsdichtungsanordnung 10 gemäß Fig. 1 freigestellt und in einer ausschnittsweise geschnittenen Ansicht gezeigt. Das Schraubenfederdichtelement 34 weist beispielhaft insgesamt zwei Windungen **44** auf. Es versteht sich, dass das Schraubenfederdichtelement 34 bei Bedarf auch weitere Windungen 44 aufweisen kann.

Die Umfangsnut 32 des Halteelements 30 ist (in Umfangsrichtung) stirnseitig durch Wandabschnitte begrenzt, die jeweils einen Drehanschlag **46** für das Schraubenfederdichtelement 34 bilden. Das Schraubenfederelement ist dadurch einerseits im montierten Zustand der Rotationsdichtungsanordnung unverlierbar in der Umfangsnut des Halteelements gehalten. Bei dem in Fig. 2 dargestellten Betriebszustand der Rotationsdichtungsanordnung wird das Schraubenfederdichtelement 34 durch den Reibwiderstand an der Dichtfläche 28 nicht bzw. nur unwesentlich tordiert, so dass das Schraubenfederdichtelement 34 mit seinen Stirnflächen **48** von den Drehanschlägen 46 des Halteelements jeweils beabstandet angeordnet ist.

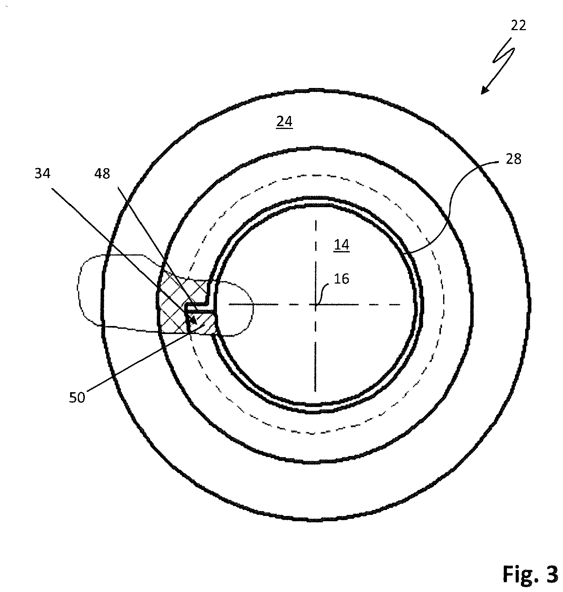

**Fig. 3** zeigt die Rotationsdichtung 22 und das zweite Maschinenteil 14 der Rotationsdichtungsanordnung 10 gemäß Fig. 1 in einer freigestellten stirnseitigen und teilweise geschnittenen Ansicht. Gut zu erkennen ist, dass das Schraubenfederdichtelement 34 aus der Umfangsnut 32 des Halteelements 24 radial in Richtung auf und gegen die Dichtfläche 28 hervorsteht.

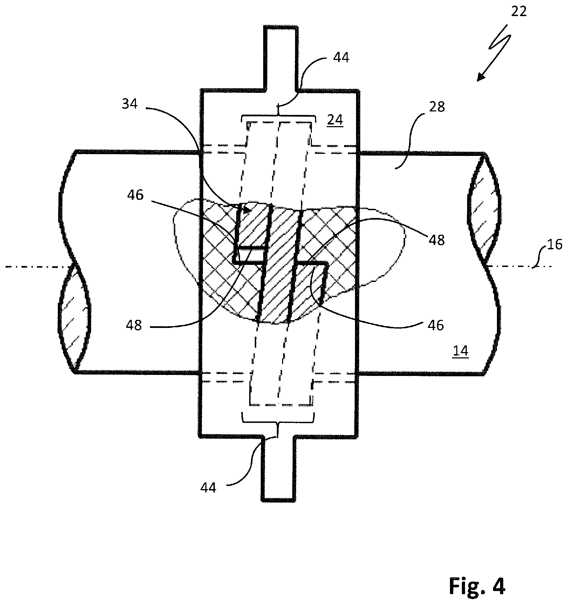

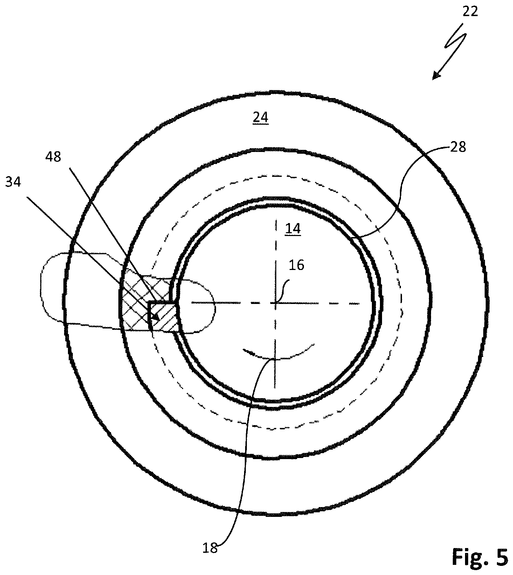

In den **Fig. 4** und **5** ist die Rotationsdichtungsanordnung 10 in einem Betriebszustand gezeigt, bei dem die als Schraubenfederdichtelement 34 ausgebildete Dichtung durch eine vergrößerte Reibung bzw. einen vergrößerten Reibwiderstand zwischen dem Schraubenfederdichtelement 34 und der Dichtfläche - unter Überwindung eines zwischen dem Schraubenfederdichtelement 34 und dem Halteelement 24 existierenden Reibwiderstands - durch das in der ersten Drehrichtung 18 (Fig. 1) rotierende zweite Maschinenteil 14 in Drehrichtung 18 mitgenommen und mit seiner jeweilig in Drehrichtung 18 weisenden Stirnseite 48 gegen den der Stirnseite 48 zugeordneten Drehanschlag 46 des Halteelements 24 geführt ist.

Aufgrund der zwischen dem Schraubenfederdichtelement 34 und der Dichtfläche 28 existierenden Reibung bzw. dem daraus resultierenden Reibwiderstand wird das am Drehanschlag 46 abgestützte Schraubenfederdichtelement 34 mit einer aus der Drehbewegung des zweiten Maschinenteils 14 resultierenden Torsionskraft beaufschlagt und tordiert. Die Torsion des Schraubenfederdichtelements 34 verhält sich - in Abhängigkeit von der gewählten Federkennlinie des Schraubenfederelements 34 - proportional zum Reibwiderstand zwischen der Dichtfläche und dem daran anliegenden Schraubenfederdichtelement 34. Das Schraubenfederdichtelement 34 wird dadurch in radialer Richtung - entgegen dem dem Schraubenfederdichtelement 34 innewohnenden elastischen Rückstellvermögens sowie der auf das Schraubenfederdichtelement 34 nach innen gerichtet wirkenden Radialkraft des Halteelements 24 - aufgeweitet und dadurch die Flächenpressung zwischen dem Schraubenfederdichtelement 34 und der Dichtfläche 28 verringert. Dadurch wird die Reibung zwischen dem Schraubenfederdichtelement und der Dichtfläche 28 und mithin der Reibwiderstand auf ein vorgegebene Reibung/einen vorgegebenen Reibwiderstand begrenzt. Im Ergebnis weist die Rotationsdichtung 22 der Rotationsdichtungsanordnung 10 dadurch einen Selbstschutzmechanismus auf, durch den das Schraubenfederdichtungselement 34 während eines Betriebseinsatzes vor einer übermäßigen reibungsbedingten (mechanischen und thermischen) Beanspruchung geschützt ist.

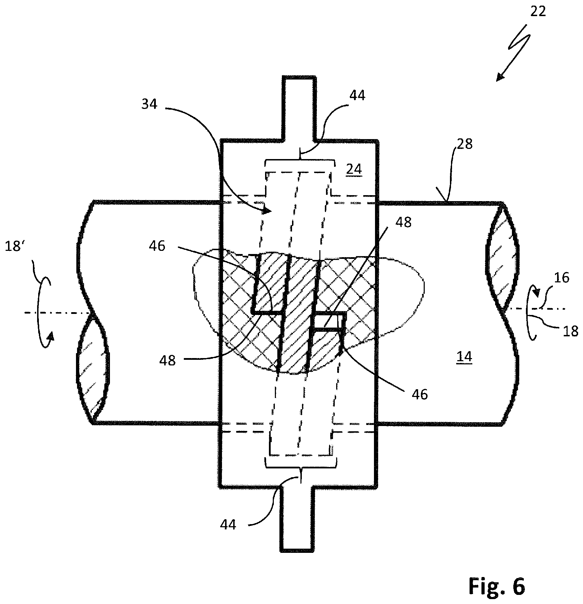

**Fig. 6** zeigt die Vorstehend erläuterte Rotationsdichtungsanordnung 10 in einem Betriebszustand, in dem das drehbar gelagerte Maschinenteil 14 in einer der ersten Drehrichtung entgegengesetzten Drehrichtung 18' bewegt wird und im aktivierten, d.h. tordierten, Zustand. Das Schraubenfederdichtelement 34 der Rotationsdichtung 22 ist dabei in einer zu den vorstehenden Ausführungen analogen Weise mit seiner in Drehrichtung **18'** weisenden Stirnfläche 48 am zugeordneten Drehanschlag 46 des Halteelements 24 abgestützt.

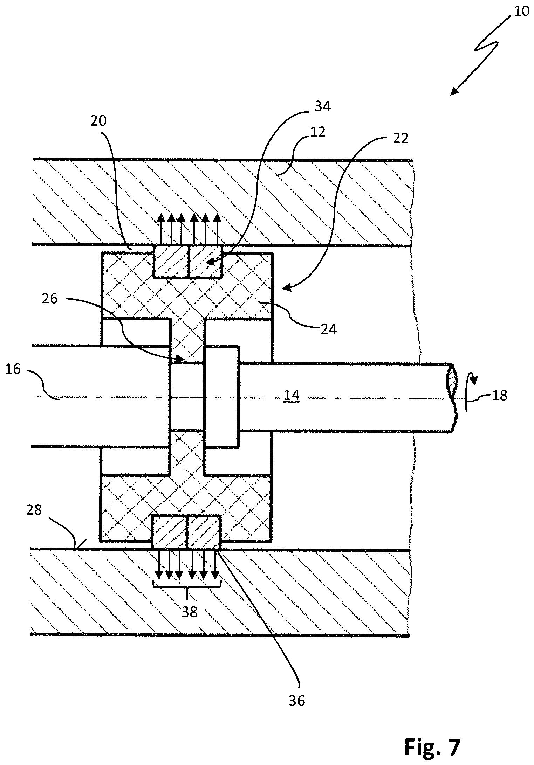

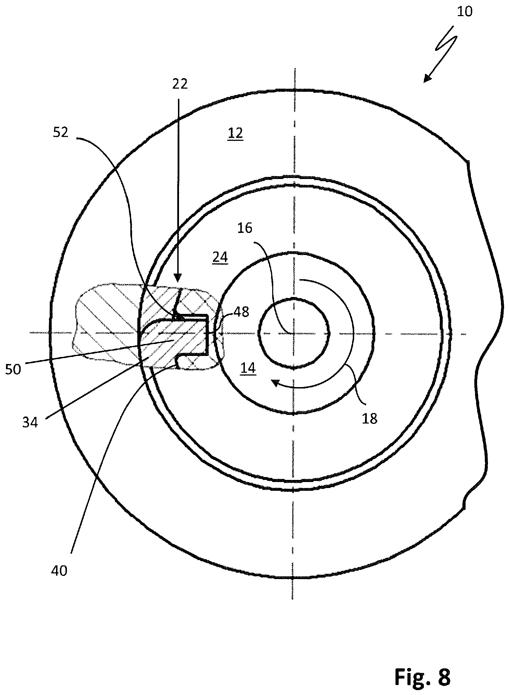

Das vorstehend erläuterte Funktionsprinzip kann gemäß der in den **Figuren 7** und **8** gezeigten Ausführungsform der Erfindung auch bei einer Rotationsdichtungsanordnung 10 mit einer radial außendichtenden Rotationsdichtung 22 realisiert werden. Das Halteelement 24 ist in diesem Fall an einer Dichtungshaltestruktur 26 des zweiten, d.h. an dem in radialer Richtung innenliegend angeordneten, Maschinenteil 14 befestigt. Das als Schraubenfederdichtelement 34 ausgebildete Dichtelement liegt an der Dichtfläche 28 des ersten Maschinenteils 12, dichtend an. Im Gegensatz zu der in den Figuren 1 bis 6 gezeigten Rotationsdichtungsanordnung wird das Schraubenfederdichtelement 34 zum Schutz vor einer übermäßigen Beanspruchung durch Reibung an der Dichtfläche 28 mittels einer torsionsbedingten und nach radial innen gerichteten Kompression in seiner Anlage an der Dichtfläche entlastet. Gemäß Fig. 8 ist das Schraubenfederdichtelement 34 mit seinem der Drehrichtung 18 entgegen gerichteten freien Endabschnitt **50** am Halteelement 24 festgelegt. Der freie Endabschnitt 50 kann diesbezüglich abgewinkelt sein und in eine Vertiefung **52** des Nutgrunds 40 eingreifen, wie dies in Fig. 8 gezeigt ist. Vorstellbar ist auch, dass der freie Endabschnitt 50 des Schraubenfederdichtelement 34 in eine Ausnehmung einer der beiden Nutflanken 42 der Umfangsnut 34 eingreift oder in anderer Weise am Halteelement 24 befestigt ist.

In dem Falle, dass der Reibwiderstand zwischen dem Schraubenfederdichtelement 34 und dem ersten Maschinenteil 12 den vorgegebenen Reibwiderstandswert erreicht bzw. übersteigt, wird das Schraubenfederdichtelement 34 ggf. gegen einen zwischen dem Schraubenfederdichtelement und dem Halteelement existierenden Reibwiderstand - durch das in der ersten Drehrichtung (Fig. 1) rotierende zweite Maschinenteil 12 in Drehrichtung mitgenommen und derart tordiert, dass das Schraubenfederdichtelement 34 in radialer Richtung - entgegen dem dem Schraubenfederdichtelement 34 innewohnenden elastischen Rückstellvermögen (nach radial außen gerichteten Rückstellkraft) sowie einer ggf. auf das Schraubenfederdichtelement 34 einwirkenden Radialkraft des Halteelements 24 - in radialer Richtung komprimiert wird, so dass die Kontaktflächenpressung 38 zwischen dem Schraubenfederdichtelement 34 und der Dichtfläche 28 verringert ist.

Das Schraubenfederdichtelement 34 kann insbesondere aus PTFE (Polytetrafluoräthylen) oder einem anderen geeigneten Kunststoff, bzw. einem Verbundwerkstoff bestehen. Das Halteelement 24 besteht vorzugsweise aus einem gummielastisch verformbaren Material, beispielsweise PU (Polyurethan) oder dergleichen.

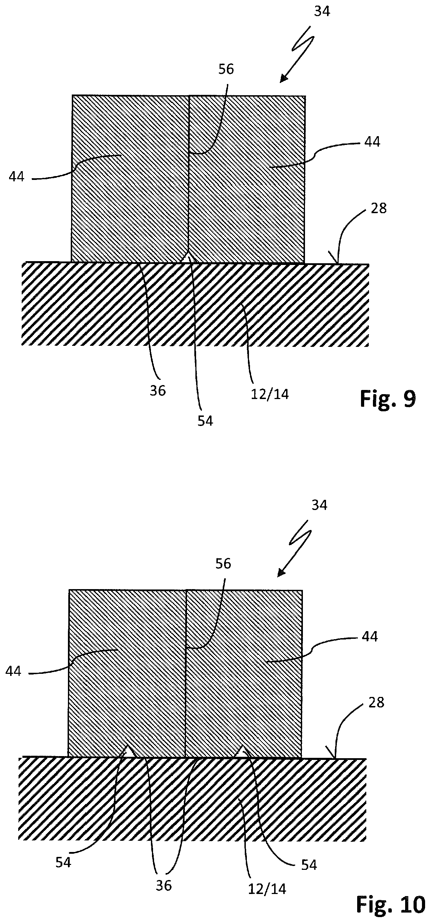

Die Schraubenfederdichtelemente 34 der vorstehend im Zusammenhang mit den Figuren 1 bis 8 erläuterten Rotationsdichtungsanordnungen 10 können jeweils eine oder mehrere Nuten bzw. Riefen aufweisen, die zur Drehachse 16 schrauben- bzw. spiralförmig verlaufend angeordnet sein können. Dadurch kann bei einer Rotation des um die Drehachse 16 rotierbaren Maschinenteils 12, 14 eine Rückförderung eines im Dichtspalt angeordnetes Fluids, beispielsweise Schmieröl, über das Schraubenfederdichtelement 34 erreicht werden. Gemäß **Fig. 9** kann eine Nut bzw. Riefe **54** beispielsweise in radialer Richtung mit dem spiralförmigen Anlagebereich **56** der einzelnen Windungen 44 des Schraubenfederdichtelements 34 fluchten. Alternativ oder zusätzlich kann die spiralförmige Nut/Riefe 54 in der Umfangsfläche 36 des Schraubenfederelements 34 zum Anlagebereich 56 axial versetzt angeordnet sein, wie dies in **Fig. 10** dargestellt ist. Die in Fig. 10 gezeigte spiralförmige Nuten/Riefe 54 weist dabei eine Steigung (in Fig. 10 nicht bezeichnet) auf, die der Steigung des Schraubenfederelements 34 entspricht. Die rückförderbare Schmierölmenge kann durch mehrere der vorgenannten Nuten/Riefen 54 weiter erhöht werden.

## Patentansprüche

1. Rotationsdichtungsanordnung (10) umfassend:
- zwei Maschinenteile (12, 14), die um eine Drehachse (16) relativ zueinander rotierbar angeordnet sind,
wobei eines der beiden Maschinenteile (12, 14) eine Dichtungshaltestruktur (26) und das jeweils andere der beiden Maschinenteile (12, 14) eine Dichtfläche (28) ausbildet,
- eine Rotationsdichtung (22) zum Abdichten eines zwischen den beiden Maschinenteilen (12, 14) ausgebildeten Dichtspalts (20),
- mit einem Halteelement (24), das an der Dichtungshaltestruktur (26) des einen Maschinenteils (12, 14) gehalten ist und mit einem Dichtungselement, das an der Dichtfläche (28) des anderen Maschinenteils (12, 14) mit einer Flächenpressung (38) dichtend anliegt,
wobei das Dichtelement als ein Schraubenfederdichtelement (34) ausgebildet ist, das zur Drehachse (16) koaxial verlaufend angeordnet ist, wobei das Schraubenfederdichtelement (34) in einer Umfangsnut (32) des Halteelements (24) in axialer Richtung form- oder kraftschlüssig gehalten angeordnet ist und wobei
das Schraubenfederdichtelement (34) derart in der Umfangsnut angeordnet ist, dass das Schraubenfederdichtelement (34) bei einer Rotationsbewegung der Maschinenteile relativ zueinander proportional zum Reibwiderstand zwischen dem Schraubenfederdichtelement (34) und der Dichtfläche (28) tordiert und die Kontaktflächenpressung (38) zwischen dem Schraubenfederdichtelement (34) und der Dichtfläche (28) verringert wird,
**dadurch gekennzeichnet, dass**
das Halteelement (24) aus einem gummielastisch verformbaren Material besteht, wobei das Schraubenfederdichtungselement (34) durch das elastische Halteelement (24) in radialer Richtung gegen die Dichtfläche (28) gespannt ist und wobei die Umfangsnut (32) des Halteelements (24) einenends einen ersten Drehanschlag (46) für das Schraubenfederdichtelement (34) aufweist.

2. Rotationsdichtungsanordnung nach Anspruch 1, **dadurch gekennzeichnet, dass** das Schraubenfederdichtelement (34) innenumfangsseitig an der Dichtfläche (28) dichtend anliegt.

3. Rotationsdichtungsanordnung nach Anspruch 1 oder 2, **dadurch gekennzeichnet, dass** die Umfangsnut (32) des Halteelements (24) anderenends einen zweiten Drehanschlag (46) für das Schraubenfederdichtelement (34) aufweist.

4. Rotationsdichtungsanordnung nach Anspruch 1, **dadurch gekennzeichnet, dass** das Schraubenfederdichtelement (34) außenumfangsseitig an der Dichtfläche (28) anliegt.

5. Rotationsdichtungsanordnung nach Anspruch 4, **dadurch gekennzeichnet, dass** das Schraubenfederdichtelement (34) mit zumindest einem seiner freien Endabschnitte (50), bevorzugt mit beiden seiner freien Endabschnitte, am Halteelement (24) lagefixiert gehalten ist.

6. Rotationsdichtungsanordnung nach einem der vorhergehenden Ansprüche, **dadurch gekennzeichnet, dass** das Schraubenfederdichtelement aufgrund seines elastischen Rückstellvermögens an der Dichtfläche vorgespannt dichtend anliegt.

7. Rotationsdichtungsanordnung nach einem der vorhergehenden Ansprüche, **dadurch gekennzeichnet, dass** das Schraubenfederdichtelement (34) an seiner an der Dichtfläche (28) anliegenden Umfangsfläche (36) eine Riefe (54) aufweist, die zur Drehachse (16) bevorzugt schraubenförmig verlaufend angeordnet ist.

8. Rotationsdichtungsanordnung nach einem der vorhergehenden Ansprüche, **dadurch gekennzeichnet, dass** das Schraubenfederdichtelement (34) aus einem thermoplastischen oder duroplastischen Kunststoff, einem Verbundwerkstoff oder aus Metall besteht.

9. Rotationsdichtungsanordnung nach einem der vorhergehenden Ansprüche, **dadurch gekennzeichnet, dass** das Schraubenfederdichtelement (34) und/oder das Halteelement (24) mit einer Gleitbeschichtung versehen ist/sind.

## Claims

1. Rotary seal arrangement (10) comprising:
- two machine parts (12, 14) which are arranged so as to be rotatable relative to one another about an axis of rotation (16), one of the two machine parts (12, 14) forming a seal retaining structure (26) and the other of the two machine parts (12, 14) forming a sealing surface (28),
- a rotary seal (22) for sealing a sealing gap (20) formed between the two machine parts (12, 14),
- comprising a retaining element (24) which is retained on the seal retaining structure (26) of one machine part (12, 14) and having a sealing element which abuts the sealing surface (28) of the other machine part (12, 14) in a sealing manner using a surface pressure (38), the sealing element being formed as a helical spring sealing element (34) which is arranged so as to extend coaxially with respect to the axis of rotation (16), the helical spring sealing element (34) being retained interlockingly or frictionally in the axial direction in a circumferential groove (32) of the retaining element (24) and the helical spring sealing element (34) being arranged in the circumferential groove such that, when the machine parts are rotated relative to one another, the helical spring sealing element (34) twists proportionally to the frictional resistance between the helical spring sealing element (34) and the sealing surface (28) and the contact surface pressure (38) between the helical spring sealing element (34) and the sealing surface (28) is reduced, **characterized in that** the retaining element (24) consists of a rubber-elastically deformable material, the helical spring sealing element (34) being tensioned against the sealing surface (28) in the radial direction by means of the elastic retaining element (24) and the circumferential groove (32) of the retaining element (24) having a first rotary stop (46) at one end for the helical spring sealing element (34).

2. Rotary seal arrangement according to claim 1, **characterized in that** the helical spring sealing element (34) abuts the sealing surface (28) on the inner circumferential side in a sealing manner.

3. Rotary seal arrangement according to either claim 1 or claim 2, **characterized in that** the circumferential groove (32) of the retaining element (24) has a second rotary stop (46) at the other end for the helical spring sealing element (34).

4. Rotary seal arrangement according to claim 1, **characterized in that** the helical spring sealing element (34) abuts the sealing surface (28) on the outer circumferential side.

5. Rotary seal arrangement according to claim 4, **characterized in that** the helical spring sealing element (34) is held in a fixed position on the retaining element (24) by means of at least one of its free end portions (50), preferably by means of both of its free end portions.

6. Rotary seal arrangement according to any of the preceding claims, **characterized in that** the helical spring sealing element abuts the sealing surface in a pretensioned and in a sealing manner due to the elastic resilience of the spring sealing element.

7. Rotary seal arrangement according to any of the preceding claims, **characterized in that** the helical spring sealing element (34) has an indentation (54) on the circumferential surface (36) thereof which abuts the sealing surface (28), which indentation is preferably arranged so as to extend helically with respect to the axis of rotation (16).

8. Rotary seal arrangement according to any of the preceding claims, **characterized in that** the helical spring sealing element (34) consists of a thermoplastic or thermosetting plastic, a composite material, or metal.

9. Rotary seal arrangement according to any of the preceding claims, **characterized in that** the helical spring sealing element (34) and/or the retaining element (24) is/are provided with an anti-friction coating.

## Revendications

1. Dispositif rotatif d'étanchement (10) comprenant :
- deux parties de machine (12, 14) agencées avec faculté de rotation relative autour d'un axe de rotation (16),
l'une des deux parties de machine (12, 14) formant une structure (26) d'entretien de l'étanchéité et l'autre considérée, parmi lesdites deux parties de machine (12, 14), formant une surface d'étanchement (28),
- une garniture rotative d'étanchement (22), réalisée pour assurer l'étanchéité d'un interstice d'étanchement (20) réservé entre lesdites deux parties de machine (12, 14),
- comportant un élément de maintien (24) retenu sur ladite structure (26) d'entretien de l'étanchéité de l'une des parties de machine (12, 14), et un élément d'étanchement appliqué de manière étanche, en exerçant une pression superficielle (38), contre la surface d'étanchement (28) de l'autre partie de machine (12, 14),
sachant que ledit élément d'étanchement est réalisé sous la forme d'un élément d'étanchement (34) à ressort hélicoïdal, agencé avec tracé coaxial à l'axe de rotation (16), lequel élément d'étanchement (34) à ressort hélicoïdal est logé dans une rainure périphérique (32) de l'élément de maintien (24), avec retenue par complémentarité de formes ou par engagement positif dans le sens axial, et sachant que
l'élément d'étanchement (34) à ressort hélicoïdal est logé dans ladite rainure périphérique de façon telle que, lors d'un mouvement rotatoire relatif des parties de machine, ledit élément d'étanchement (34) à ressort hélicoïdal accuse une torsion, proportionnellement à la résistance au frottement entre ledit élément d'étanchement (34) à ressort hélicoïdal et la surface d'étanchement (28), et que la pression superficielle de contact (38) soit réduite entre ledit élément d'étanchement (34) à ressort hélicoïdal et ladite surface d'étanchement (28),
**caractérisé par le fait que**
l'élément de maintien (24) est constitué d'un matériau déformable doué de l'élasticité du caoutchouc, sachant que l'élément d'étanchement (34) à ressort hélicoïdal est serré dans le sens radial contre la surface d'étanchement (28), par ledit élément élastique de maintien (24), et sachant que la rainure périphérique (32) dudit élément de maintien (24) est munie, à une extrémité, d'une première butée de rotation (46) affectée audit élément d'étanchement (34) à ressort hélicoïdal.

2. Dispositif rotatif d'étanchement selon la revendication 1, **caractérisé par le fait que** l'élément d'étanchement (34) à ressort hélicoïdal est en applique contre la surface d'étanchement (28) côté pourtour intérieur.

3. Dispositif rotatif d'étanchement selon la revendication 1 ou 2, **caractérisé par le fait que** la rainure périphérique (32) de l'élément de maintien (24) est munie, à l'autre extrémité, d'une seconde butée de rotation (46) affectée à l'élément d'étanchement (34) à ressort hélicoïdal.

4. Dispositif rotatif d'étanchement selon la revendication 1, **caractérisé par le fait que** l'élément d'étanchement (34) à ressort hélicoïdal est en applique contre la surface d'étanchement (28) côté pourtour extérieur.

5. Dispositif rotatif d'étanchement selon la revendication 4, **caractérisé par le fait que** l'élément d'étanchement (34) à ressort hélicoïdal est retenu avec blocage à demeure, sur l'élément de maintien (24), par au moins l'un de ses tronçons extrêmes libres (50), de préférence par l'un et l'autre de ses tronçons extrêmes libres.

6. Dispositif rotatif d'étanchement selon l'une des revendications précédentes, **caractérisé par le fait que** l'élément d'étanchement à ressort hélicoïdal est en applique contre la surface d'étanchement, de manière étanche, avec précontrainte résultant de sa faculté de rappel élastique.

7. Dispositif rotatif d'étanchement selon l'une des revendications précédentes, **caractérisé par le fait que** l'élément d'étanchement (34) à ressort hélicoïdal est doté, au niveau de sa surface périphérique (36) en applique contre la surface d'étanchement (28), d'une striure (54) ménagée, de préférence, avec tracé hélicoïdal par rapport à l'axe de rotation (16).

8. Dispositif rotatif d'étanchement selon l'une des revendications précédentes, **caractérisé par le fait que** l'élément d'étanchement (34) à ressort hélicoïdal consiste en une matière thermoplastique ou thermodurcissable, en un matériau composite, ou en du métal.

9. Dispositif rotatif d'étanchement selon l'une des revendications précédentes, **caractérisé par le fait que** l'élément d'étanchement (34) à ressort hélicoïdal, et/ou l'élément de maintien (24), est/sont pourvu(s) d'un revêtement de glissement.
